# DEMANDE DE BREVET EUROPEEN

(11) **EP 4 633 024 A1**
(43) Date de publication de la demande: **15.10.2025**
(21) Numéro de dépôt: 25161515.9
(22) Date de dépôt: 04.03.2025
(51) Int. Cl.: H02M 3/156, H02M 1/32

(54) **CONVERTISSEUR ABAISSEUR A DECOUPAGE**

(30) Priorité: 19.03.2024 FR 2402718
(71) Demandeur: STMicroelectronics International N.V., 1228 Plan-les-Ouates, Geneva (CH)
(72) Inventeur: PONS, Alexandre, 38220 VIZILLE (FR)
(74) Mandataire: Cabinet Beaumont

(57) **Abrégé**

La présente description concerne un convertisseur abaisseur à découpage (3). Une première borne (200) reçoit une tension régulée et est couplée à un potentiel de référence (GND) par un élément résistif (R). Une boucle principale (208) régule la tension régulée à partir d'une comparaison d'une première tension (Vfb) sur la première borne à un premier seuil. Un circuit (C) active une source de courant (CS) fournissant un premier courant (I1) à la première borne (200) lorsque la première tension est inférieure à un deuxième seuil. Une boucle en courant (A2) régule la première tension à la valeur d'un troisième seuil en tirant un deuxième courant (I2) sur la première borne (200) si la première tension est supérieure au troisième seuil.

## Description

### Domaine technique

La présente description concerne de façon générale les circuits électroniques, et, plus particulièrement, les convertisseurs abaisseurs à découpage ("buck switched mode power supply" en anglais).

### Technique antérieure

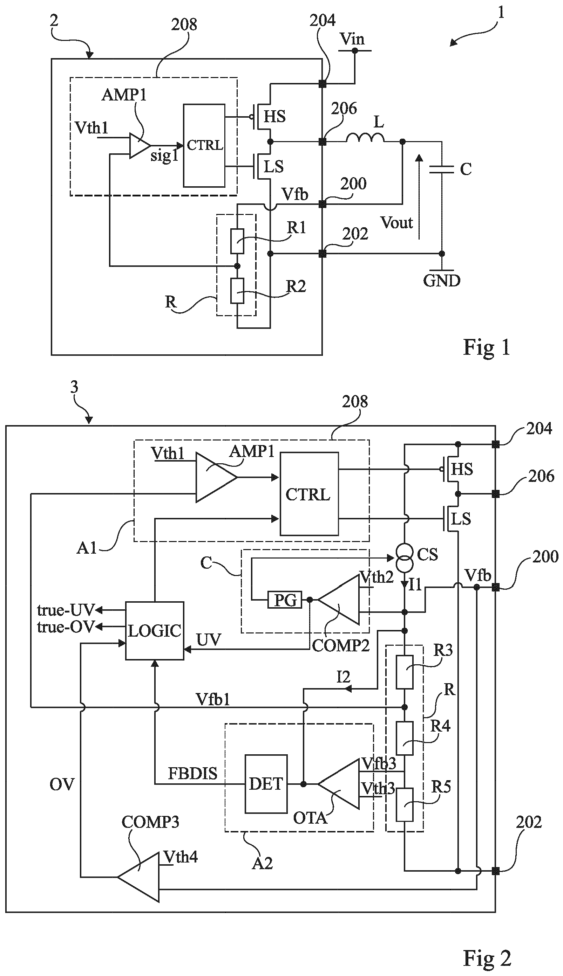

La figure 1 illustre un exemple d'un dispositif 1 comprenant un convertisseur abaisseur à découpage 2.

Le convertisseur 2 est configuré pour réguler une tension Vout à une valeur de consigne déterminée par un seuil Th1.

Le convertisseur 2 comprend une borne 200 configurée pour recevoir la tension régulée Vout. Le convertisseur 2 comprend un élément résistif R (délimité par des traits pointillés en figure 1) couplant la borne 200 à une borne 202 du convertisseur 2, la borne 2 étant configurée pour recevoir un potentiel de référence GND, par exemple la masse. Par exemple, une borne de l'élément R est connectée à la borne 200 et une autre borne de l'élément R est connectée à la borne 202.

Le convertisseur 2 comprend un interrupteur de coté haut HS. L'interrupteur HS est connecté entre une borne 204 du convertisseur 2 et une borne 206 de sortie du convertisseur 2. La borne 204 est configurée pour recevoir un potentiel d'alimentation Vin, le potentiel Vin étant supérieur au potentiel GND et à la valeur de consigne de la tension régulée Vout.

Les bornes 200 et 206 du convertisseur 2 sont configurées pour être couplées l'une à l'autre. De préférence, comme c'est le cas dans le dispositif 1, les bornes 200 et 206 sont couplées l'une à l'autre par une inductance L. Par exemple, une borne de l'inductance L est connectée à la borne 200, une autre borne de l'inductance L étant connectée à la borne 206. De préférence, l'inductance L ne fait pas partie du convertisseur 2.

Les bornes 200 et 202 du convertisseur 2 sont configurées pour être couplées l'une à l'autre par un élément capacitif C. La tension régulée Vout est disponible aux bornes de l'élément C. Par exemple, une borne de l'élément C est connectée à la borne 200, une autre borne de l'élément C étant connectée à la borne 202. De préférence, l'élément C ne fait pas partie du convertisseur 2. A titre d'exemple, l'élément C correspond à une capacité de lissage et/ou à une capacité d'une charge (non représentée en figure 1) alimentée par la tension Vout.

Dans l'exemple de la figure 1, le convertisseur 2 comprend en outre un interrupteur de côté bas LS. L'interrupteur LS est connecté entre les bornes 206 et 202.

Le convertisseur 2 comprend une boucle de régulation principale 208 (délimitée par des traits pointillés en figure 1).

La boucle 208 est configurée pour comparer la tension Vfb sur la borne 200 au seuil Th1, et pour commander les interrupteurs HS et LS sur la base du résultat de cette comparaison de sorte à réguler la tension Vfb, donc la tension Vout, à sa valeur de consigne. Par exemple, la valeur du seuil Th1 est égale à la valeur de consigne de la tension Vout.

A titre d'exemple, la boucle de régulation 208 commande les interrupteurs HS et LS en modulation de largeur d'impulsion (PWM de l'anglais "Pulse Width Modulation") et/ou en modulation de fréquence d'impulsion (PFM de l'anglais "Pulse Frequency Modulation") et/ou en modulation de saut d'impulsion (PSM de l'anglais "Pulse Skip Modulation").

A titre d'exemple, la boucle de régulation 208 comprend un amplificateur opérationnel AMP1 configuré pour comparer la tension Vfb au seuil Th1, et pour fournir un signal sig1 résultant de cette comparaison.

Par exemple, l'amplificateur AMP1 a une entrée recevant une tension Vfb1 déterminée par la tension Vfb, une autre entrée recevant une tension Vth1 déterminée par le seuil Th1, et une sortie fournissant le signal sig1. Par exemple, l'élément résistif R est un pont diviseur de tension comprenant deux résistances R1 et R2 connectées l'une à l'autre en série entre les bornes 200 et 202, et la tension Vfb1 est disponible sur un noeud de connexion des résistances R1 et R2 entre elles. Les valeurs des résistances R1 et R2, et celles de la tension Vth1 sont alors déterminées pour que la comparaison de la tension Vth1 à la tension Vfb1 reviennent à comparer la tension Vfb au seuil Th1.

A titre d'exemple, la boucle 208 comprend un circuit CTRL configuré pour recevoir le signal sig1, et pour commander les interrupteurs HS et LS sur la base du signal sig1.

Plus particulièrement, la boucle 208 est configurée pour commander des commutations des interrupteurs HS et LS d'une manière propre à augmenter la valeur de la tension Vout lorsque la tension Vfb est inférieure au seuil Th1. Dit autrement, la boucle 208 est configurée pour augmenter la tension régulée Vout lorsque la tension Vfb est inférieur au Th1.

Ainsi, lorsque la tension Vout diminue sous sa valeur de consigne et que la tension Vfb devient inférieure au seuil Th1, la boucle de régulation 208 commande les interrupteurs HS et LS de sorte que la tension Vout augmente vers sa valeur de consigne. Lorsque la tension Vout augmente et redevient supérieure ou égale à sa valeur de consigne, il en résulte que la tension Vfb redevient supérieure ou égale au seuil Th1. De préférence, une fois la tension Vfb supérieure ou égale au seuil Th1, la boucle 208 ne commande plus les interrupteurs HS et LS de sorte à augmenter la tension Vout.

Le fonctionnement décrit ci-dessus est vrai tant que la borne 200 reçoit bien la tension Vout, c'est à dire tant que la tension Vfb est bien égale à Vout.

En effet, si la borne 200 se retrouve déconnectée de la tension Vout, c'est à dire que la borne 200 ne reçoit plus la tension Vout, par exemple, car une soudure d'un fil ou d'une piste conductrice à la borne 200 est détruite ou défectueuse, l'élément résistif R tire le potentiel de la borne 200 au potentiel de la borne 202, d'où il résulte que la tension Vfb est nulle.

La tension Vfb est alors inférieure au seuil Th1 et la boucle 208 commande donc les interrupteurs HS et LS de sorte à augmenter la tension Vout. En l'absence de déconnexion entre la tension Vout et la borne 200, cela aurait résulté en une augmentation de la tension Vfb. Cependant, bien que la tension Vout augmente, la tension Vfb reste nulle du fait de la déconnexion entre la tension Vout et la borne 200. La tension Vout augmente alors bien au-dessus de sa valeur de consigne et peut atteindre des valeurs susceptibles d'endommager une charge alimentée par la tension Vout, voire d'endommager le convertisseur 2 lui-même, ce qui n'est pas souhaitable.

Bien que cela ne soit pas représenté en figure 1, il existe des convertisseurs similaires au convertisseur 2 comprenant en outre un circuit configuré pour détecter une sous-tension ("under-voltage" en anglais) de la tension Vout par rapport à sa valeur de consigne. Ce circuit est configuré pour comparer la tension Vfb à un seuil Th2 inférieur au seuil Th1. Ce circuit est en outre configuré pour activer un signal d'alarme lorsque la tension Vfb reste en dessous du seuil Th2 pendant une durée supérieure à une durée d'antirebond ("debounce period" en anglais). Lorsque la borne 200 est bien connectée à la tension Vout, l'activation du signal d'alarme signifie que la tension Vout est passée sous une valeur basse inférieure à sa valeur de consigne pendant une durée supérieure à la durée d'antirebond, c'est à dire qu'il y a une sous-tension détectée sur la tension Vout.

Lors d'une déconnexion entre la borne 200 et la tension Vout, du fait que la tension Vfb est nulle, ce signal de détection d'une sous tension de la tension Vout s'active donc à la fin de la période d'antirebond. On pourrait donc penser à utiliser ce signal d'alarme pour désactiver la boucle de régulation principale de sorte que, en cas de déconnexion entre la borne 200 et la tension Vout, la tension Vout n'augmente pas jusqu'à des valeurs pouvant endommager le convertisseur ou la charge qu'il alimente.

Toutefois, cela entrainerait des désactivations de la boucle de régulation principale en cas de sous tension de la tension Vout alors que la borne 200 est bien connectée à la tension Vout, ce qui n'est pas souhaitable.

En outre, en cas de déconnexion entre la borne 200 et la tension Vout, la tension Vout aurait tout de même le temps, pendant la période d'antirebond précédant l'activation du signal d'alarme, d'atteindre des valeurs susceptibles d'endommager le convertisseur ou la charge qu'il alimente, ce qui n'est pas souhaitable.

### Résumé de l'invention

Il existe un besoin de pallier tout ou partie des inconvénients des convertisseurs abaisseurs à découpage connus, par exemple des convertisseurs abaisseurs à découpage du type de celui décrit en relation avec la figure 1.

Par exemple, il existe un besoin de pallier tout ou partie de ces inconvénients lorsqu'ils résultent de, ou sont liés à, une déconnexion entre la tension régulée par le convertisseur et une borne du convertisseur configurée pour recevoir cette tension régulée, c'est à dire lorsque ces inconvénients résultent d'une déconnexion entre cette borne du convertisseur et un noeud externe au convertisseur sur lequel est disponible la tension régulée par le convertisseur.

Un mode de réalisation pallie tout ou partie des inconvénients des convertisseurs abaisseurs à découpage connus.

Un mode de réalisation prévoit un convertisseur abaisseur à découpage comprenant :
- une première borne configurée pour recevoir une tension régulée par le convertisseur ;
- un élément résistif couplant la première borne et une deuxième borne configurée pour recevoir un potentiel de référence ;
- une boucle de régulation principale configurée pour :
   * comparer une première tension sur la première borne avec un premier seuil, et
   * réguler, sur la base de cette comparaison, la tension régulée à une valeur de consigne déterminée par le premier seuil en commandant un interrupteur de côté haut du convertisseur ou l'interrupteur de côté haut et un interrupteur de côté bas du convertisseur,
- une source de courant sélectivement activable configurée à l'état actif pour fournir un premier courant à la première borne ;
- un circuit d'activation configuré pour activer la source de courant pendant au moins une première durée lorsque la première tension devient inférieure à un deuxième seuil inférieur au premier seuil ; et
- une boucle de régulation en courant configurée pour :
   * comparer la première tension à un troisième seuil supérieur au premier seuil,
   * réguler la première tension à la valeur du troisième seuil en tirant un deuxième courant sur la première borne si la première tension est supérieure au troisième seuil, et
   * ne rien faire si la première tension est inférieure au troisième seuil.

Selon un mode de réalisation, un produit d'une valeur de l'élément résistif par une valeur du premier courant est supérieur au troisième seuil.

Selon un mode de réalisation, la boucle de régulation principale est configurée pour augmenter la tension régulée lorsque la première tension est inférieure au premier seuil.

Selon un mode de réalisation, la source de courant est connectée entre la première borne et une borne du convertisseur configuré pour recevoir un potentiel d'alimentation.

Selon un mode de réalisation, la boucle de régulation en courant est configurée pour que, lorsque la première tension est supérieure au troisième seuil, le deuxième courant tiré sur la première borne ait une valeur déterminée par la différence entre la première tension et le troisième seuil.

Selon un mode de réalisation, la boucle de régulation en courant comprend un amplificateur transimpédance ayant une première entrée configurée pour recevoir une tension déterminée par la première tension, une deuxième entrée configurée pour recevoir une tension déterminée par le troisième seuil, et une sortie couplée, de préférence connectée, à la première borne et configurée pour tirer le deuxième courant sur la première borne lorsque la première tension est supérieure au troisième seuil.

Selon un mode de réalisation, l'amplificateur transimpédance comprend :
- une paire différentielle recevant les entrées respectives de l'amplificateur transimpédance ; et
- un transistor couplant la sortie de l'amplificateur transimpédance à la deuxième borne, une grille du transistor étant commandée par la paire différentielle.

Selon un mode de réalisation, la boucle de régulation en courant comprend un circuit de détection configuré pour détecter que le deuxième courant est non nul, et pour fournir un signal indiquant lorsque le deuxième courant est non nul, le circuit de détection comprenant :
- un transistor connecté entre un noeud et la deuxième borne et ayant une grille connectée à la grille du transistor de l'amplificateur transimpédance, et
- un autre transistor configuré pour fournir un courant audit noeud, le signal indiquant lorsque le deuxième courant est non nul étant déterminé à partir d'un potentiel dudit noeud.

Selon un mode de réalisation, la boucle de régulation en courant comprend un circuit de détection configuré pour détecter que le deuxième courant est non nul, et pour fournir un signal indiquant lorsque le deuxième courant est non nul.

Selon un mode de réalisation, le circuit d'activation comprend :
- un comparateur configuré pour comparer la première tension au deuxième seuil et pour fournir un signal binaire indiquant le résultat de ladite comparaison ; et
- un circuit recevant ledit signal binaire et étant configuré pour activer la source de courant pendant au moins la première durée lorsque le signal binaire commute à un état indiquant que la première tension est inférieure au deuxième seuil.

Selon un mode de réalisation, une valeur du premier courant est configurée pour que, lorsque la première borne reçoit la tension régulée, une variation de la tension régulée pendant la première durée où la première borne reçoit le premier courant soit négligeable, par exemple pour qu'une augmentation de la tension régulée provoquée par le premier courant ait une pente inférieure à 10 µV par microseconde.

Selon un mode de réalisation, la première durée est supérieure au temps de réaction de la boucle de régulation en courant.

Selon un mode de réalisation :
- le convertisseur comprend une troisième borne ;
- l'interrupteur de côté haut est connecté entre une borne configurée pour recevoir un potentiel d'alimentation et la troisième borne ; et
- le convertisseur est configuré pour que ses première et troisième bornes soient couplées entre elles, de préférence par une inductance, et pour qu'un élément capacitif soit connecté entre ses deuxième et première bornes.

Selon un mode de réalisation, la boucle de régulation principale est configurée pour commander des commutations de l'interrupteur de côté haut ou des interrupteurs de côté haut et de côté bas de sorte à augmenter la tension régulée lorsque la première tension est inférieure au premier seuil.

Un autre mode de réalisation prévoit un dispositif comprenant un convertisseur tel que défini ci-dessus, une inductance connectée entre les première et troisième bornes du convertisseur et un élément capacitif connecté entre les première et deuxième bornes du convertisseur.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1, décrite précédemment, représente un dispositif comprenant un exemple de convertisseur abaisseur à découpage ;
la figure 2 représente un exemple de mode de réalisation d'un convertisseur abaisseur à découpage ;
la figure 3 représente un exemple de mise en œuvre d'un circuit du convertisseur de la figure 2 selon un mode de réalisation ;
la figure 4 illustre par des chronogrammes un exemple de fonctionnement d'un convertisseur abaisseur à découpage comprenant un circuit de détection d'une sous-tension tel que décrit précédemment ;
la figure 5 illustre par des chronogrammes un exemple de fonctionnement du convertisseur de la figure 2.

### Description des modes de réalisation

De mêmes éléments ont été désignés par de mêmes références dans les différentes figures. En particulier, les éléments structurels et/ou fonctionnels communs aux différents exemples et modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les divers circuits pouvant être alimentés par une tension régulée par un convertisseur abaisseur à découpage n'ont pas été détaillés, ces circuits pouvant être également alimentés par une tension régulée par un convertisseur abaisseur à découpage selon les modes de réalisation et variantes décrits.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % ou à 10° près, de préférence à 5 % ou à 5° près.

La figure 2 représente un exemple de convertisseur abaisseur à découpage 3 selon un mode de réalisation. Bien que cela ne soit pas illustré en figure 2, le convertisseur 3 peut être utilisé dans le dispositif 1 de la figure 1, en lieu et place du convertisseur 2.

Le convertisseur 3 comprend, comme le convertisseur 2 de la figure 1, les bornes 200, 202, 204 et 206, l'interrupteur HS, l'interrupteur LS, l'élément résistif R et la boucle de régulation principale 208.

Toutefois, par rapport au convertisseur 2, le convertisseur 3 comprend en outre une boucle de régulation secondaire, ou boucle de régulation en courant, A2, une source de courant CS sélectivement activable, et un circuit d'activation C.

La source de courant CS est configurée, lorsqu'elle est commandée à l'état actif, pour fournir un courant I1 à la borne 200. A titre d'exemple, la source de courant CS est connectée à la borne 200, par exemple entre la borne 204 et la borne 200. Le courant I1 est un courant continu (DC de l'anglais "Direct Current"). Lorsqu'elle est à l'état inactif, la source de courant CS ne délivre pas de courant.

Ainsi, lorsque la borne 200 est déconnectée de la tension Vout et que la source de courant CS est activée, la source de courant CS se retrouve en série avec l'élément résistif R et le courant I1 circule dans l'élément résistif R.

Le circuit C est configuré pour activer la source de courant CS pendant au moins une durée T1 lorsque la tension Vfb devient inférieure à un seuil Th2. Le seuil Th2 est inférieur au seuil Th1.

Par exemple, le circuit CS est configuré pour comparer la tension Vfb avec le seuil Th2, et pour activer la source CS pendant au moins la durée T1 lorsque le résultat de cette comparaison indique que la tension Vfb vient de passer sous le seuil Th2. Aucun retard autre que ceux liés aux propagations des signaux n'est prévu entre le moment où tension Vfb vient de passer sous le seuil Th2 et le moment où le circuit C active la source de courant CS. En outre, du fait que la source de courant CS est activée pour au moins la durée T1 lorsque la tension Vfb passe sous le seuil Th2, la source CS reste activée pour toute la durée T1 même si la tension Vfb remonte au-dessus du seuil Th2 avant la fin de la durée T1.

A titre d'exemple, le circuit CS comprend un comparateur COMP2 configuré pour comparer la tension Vfb avec le seuil Th2, et pour fournir un signal sig2 indiquant le résultat de cette comparaison. A titre d'exemple, le signal sig2 est un signal binaire. A titre d'exemple, le comparateur COMP2 a une première entrée recevant une tension déterminée par la tension Vfb, une deuxième entrée recevant une tension Vth2 déterminée par le seuil Th2, et une sortie fournissant le signal sig2. Dans l'exemple illustré en figure 2, la première entrée du circuit COMP2 reçoit directement la tension Vfb.

A titre d'exemple, le circuit CS comprend un circuit PG en plus du comparateur COMP2. Le circuit PG est configuré pour recevoir le signal sig2, et pour activer la source de courant CS pendant au moins la durée T1 lorsque ce signal sig2 commute à un état indiquant que la tension Vfb est inférieure au seuil Th2.

La boucle de régulation en courant A2 est configurée pour comparer la tension Vfb à un seuil Th3. Le seuil Th3 est supérieur au seuil Th1.

La boucle de régulation A2 est en outre configurée, lorsque la tension Vfb est supérieure au seuil Th3, pour réguler la tension Vfb à la valeur du seuil Th3.

Ainsi, si la tension Vfb est supérieure au seuil Th3, elle est également supérieure au seuil Th1, d'où il résulte que la boucle de régulation principale 208 ne commande pas les interrupteurs HS et LS de sorte à augmenter la tension Vout. Il en résulte que, lorsque la tension Vfb est supérieure au seuil Th3, la tension Vout n'augmente pas en raison d'une action de la boucle de régulation principale 208.

Plus particulièrement, lorsque la tension Vfb est supérieure au seuil Th3, la boucle de régulation A2 est configurée pour réguler la tension Vfb à la valeur du seuil Th3 en tirant un courant I2 sur la borne 200. De préférence, la valeur du courant I2 tiré sur la borne 200 lorsque la tension Vfb est supérieure au seuil Th3 est déterminée, par exemple est proportionnelle, à l'écart entre la tension Vfb et le seuil Th3.

En outre, lorsque la tension Vfb est inférieure au seuil Th3, la boucle de régulation en courant A2 est configurée pour ne pas réguler la tension Vfb, c'est à dire pour ne pas fournir ou tirer de courant sur la borne 200. Dit autrement, lorsque la tension Vfb est inférieure au seuil Th3, la boucle A2 est configurée pour ne rien faire.

Le fonctionnement du convertisseur 3 lorsque la borne 200 est soudainement déconnectée de la tension Vout est donc le suivant.

D'abord, la tension Vfb est tirée au potentiel GND par l'élément résistif R, et passe donc sous le seuil Th2.

Cela entraîne l'activation de la source de courant CS pour au moins une durée T1.

L'activation de la source de courant CS entraine que le courant I1 circule dans l'élément résistif, et que la tension Vfb s'établit à une valeur supérieure au seuil Th3. Le produit du courant I1 par la valeur de l'élément résistif R est donc supérieur au seuil Th3. De préférence, le produit du courant I1 par l'élément résistif R est inférieur à une valeur maximale de la tension Vfb au-delà de laquelle un ou plusieurs circuits du convertisseur 3 pourraient être endommagés.

Du fait que la tension Vfb est supérieure au seuil Th3, la boucle de régulation en courant A2 se met à tirer le courant I2 sur la borne 200. Il en résulte que le courant circulant dans l'élément résistif R est égal au courant I1 moins le courant I2, et que la tension Vfb diminue jusqu'à s'établir à la valeur du seuil Th3.

Comme le seuil Th3 est supérieure au seuil Th1, la boucle de régulation principale 208 n'augmente pas la valeur de la tension Vout tant que la tension Vfb reste régulée à la valeur du seuil Th3 par la boucle de régulation A2. Ainsi, tant que la valeur Vfb est régulée à la valeur du seuil Th3 par la boucle A2, la tension Vout n'augmente pas jusqu'à atteindre des valeurs qui pourraient endommager le convertisseur 3 ou la charge qu'il alimente.

Par ailleurs, lorsque la borne 200 est bien connectée à la tension Vout, le fonctionnement du convertisseur 3 est le suivant.

Si la borne 200 reçoit bien la tension Vout, et que la tension Vout est supérieure au seuil Th2, la boucle de régulation principale 208 régule la tension Vout à sa valeur de consigne en comparant la tension Vfb, donc Vout, au seuil Th1 et en commandant les interrupteurs HS et LS en conséquence. La tension Vfb est alors inférieur au seuil Th3, et la boucle 2 ne tire pas de courant sur la borne 200. Le fonctionnement du convertisseur 3 est alors identique à celui du convertisseur 2, les circuits C, CS et A2 n'ayant ici aucune influence sur ce fonctionnement.

Si la borne 200 reçoit bien la tension Vout, et que la tension Vout est inférieure au seuil Th2, par exemple car le convertisseur 3 est dans une phase de démarrage ("start-up phase" en anglais) ou bien car la charge alimentée par le convertisseur 3 tire un courant qui conduit la tension Vout à devenir inférieure au seuil Th2, le circuit C active la source de courant CS pour au moins la durée T1. Le courant I1 est alors fourni à la borne 200, c'est à dire à la charge alimentée par le convertisseur, l'élément capacitif C et l'élément résistif R. La valeur du courant I1 est configurée pour que, dans ce cas, la variation de la tension Vout induite par la fourniture du courant I1 à la borne 200 pendant la durée T1 soit négligeable. Ainsi, la tension Vout, donc la tension Vfb, restent inférieures au seuil Th3 d'où il résulte que la boucle A2 ne tire aucun courant sur la borne 200. Comme la boucle A2 ne tire pas de courant sur la borne 200 et que l'activation de la source de courant CS n'a qu'une influence négligeable sur la valeur de la tension Vout, le fonctionnement du convertisseur 3 est alors identique à celui du convertisseur 2, les circuits C, CS et A2 n'ayant ici aucune influence sur ce fonctionnement.

De préférence, la durée T1 est choisie supérieure au temps de réaction de la boucle A2, ou, dit autrement, est déterminée par la bande-passante de la boucle A2. Cela permet que, en cas de déconnexion entre la borne 200 et la tension Vout, la source de courant CS soit encore en train de fournir le courant I1 à la borne 200 lorsque la boucle A2 commence à tirer un courant I2 non nul sur cette borne.

A titre d'exemple, le courant I1 est configuré pour qu'une augmentation de la tension régulée provoquée par la fourniture du courant I1 à la borne 200 ait une pente inférieure à 10 µV par microseconde. Par exemple, comme l'élément capacitif C a une valeur généralement élevée, par exemple supérieure à 10 µF, le courant I1 est par exemple choisi inférieur à 100 µA, d'où il résulte que la pente de l'augmentation de la tension Vout résultant uniquement de la fourniture du courant I1 à la borne 200 est inférieure à 10 µV par microseconde.

A titre d'exemple, le circuit A2 comprend un amplificateur opérationnel transimpédance ("Operationnal Transimpedance Amplifier" en anglais) OTA. L'amplificateur OTA a une première entrée configurée pour recevoir une tension déterminée par la tension Vfb, une deuxième entrée configurée pour recevoir une tension déterminée par le seuil Th3, et une sortie couplée, de préférence connectée, à la borne 200. La sortie de l'amplificateur OTA est configurée pour tirer le courant I2 sur la borne 200 lorsque la tension Vfb est supérieure au seuil Th3.

Par exemple, l'amplificateur OTA reçoit une tension Vfb3 sur sa première entrée et une tension Vth3 sur sa deuxième entrée. Par exemple, l'élément résistif R est un pont diviseur de tension comprenant trois résistances R3, R4 et R5 connectées en série entre les bornes 200 et 202 avec la résistance R5 connectée à la borne 202, et la tension Vfb3 est disponible sur un noeud connexion des résistances R5 et R4 entre elles. Dans cet exemple, la tension Vfb1 est par exemple disponible sur le noeud de connexion de la résistance R4 à la résistance R3. Les valeurs des résistances R3, R4, et R5 sont alors déterminées pour que la comparaison de la tension Vth1 à la tension Vfb1 revienne à comparer la tension Vfb au seuil Th1 et que la comparaison de la tension Vfb3 à la tension Vth3 revienne à comparer la tension Vfb au seuil Th3. Dans cet exemple particulier, les valeurs des résistances R3, R4, et R5 sont de préférence déterminées pour que les tensions Vth1 et Vth3 soient égales, ce qui permet de ne générer qu'une seule tension au lieu de deux, par exemple avec un circuit à bande interdite ("band-gap" en anglais).

On a décrit ci-dessus un exemple de mode de réalisation d'un convertisseur 3 permettant de protéger une charge alimentée par la tension régulée Vout d'une déconnexion entre la borne 200 et la tension Vout.

Il peut être souhaitable que le convertisseur 3 indique lorsqu'une telle déconnexion se produit.

Ainsi, de manière optionnelle, la boucle A2 est configurée pour fournir un signal FBDIS indiquant lorsqu'une telle déconnexion se produit. Par exemple, la boucle A2 est configurée pour indiquer lorsqu'un courant I2 non nul est tiré sur la borne 200. En effet, lorsque la boucle 200 tire un courant I2 non nul sur la borne 200, cela signifie que la borne 200 est déconnectée de la tension Vout.

A titre d'exemple, la boucle de régulation en courant comprend un circuit de détection DET configuré pour détecter que le courant I2 est non nul, par exemple supérieur à une valeur non nulle de courant, et pour fournir le signal FBDIS indiquant lorsque le courant I2 est non nul, ou, dit autrement, indiquant que la borne 200 n'est pas connectée à la tension Vout.

A titre d'exemple, lorsque la boucle A2 comprend l'amplificateur OTA comme cela a été décrit précédemment, le circuit DET est couplé à la sortie de l'amplificateur OTA.

A titre d'exemple, lorsque la boucle A2 est configurée pour fournir le signal FBDIS, ce signal peut être fourni sur une borne de sortie (non représentée en figure 2) du convertisseur 3, par exemple de sorte à indiquer à l'environnement du convertisseur 3 que la borne 200 est déconnectée de la tension.

A titre d'exemple alternatif ou complémentaire, lorsque la boucle A2 est configurée pour fournir le signal FBDIS, la boucle de régulation principale 208 peut être commandée par ce signal FBDIS, par exemple de sorte à désactiver la boucle de régulation 208 lorsqu'une déconnexion de la borne 200 est détectée. Dans l'exemple de la figure 2, le signal FBDIS est fourni à un circuit LOGIC, et le circuit LOGIC commande la boucle 208 à partir du signal FBDIS. Dans d'autres exemples non illustrés, le signal FBDIS est fourni directement à la boucle 208 pour commander cette dernière.

De manière optionnelle, lorsque la boucle A2 est configurée pour fournir le signal FBDIS, le convertisseur 3 comprend en outre un circuit de détection de sous-tension de la tension Vout. Dans l'exemple de la figure 2, en l'absence de déconnexion entre la borne 200 et la tension Vout, il est considéré que la tension Vout présente une sous-tension si elle est inférieure à un seuil Th5 inférieur au seuil Th1. Le circuit de détection de sous tension est alors configuré pour détecter lorsque la tension Vfb est inférieure au seuil Th5 pendant toute une période d'antirebond et, si le signal FBDIS n'indique pas de déconnexion entre la borne 200 et la tension Vout, pour indiquer avec un signal d'alarme true-UV que la tension Vout présente une sous-tension.

A titre d'exemple, le circuit de détection de sous tension comprend un comparateur configuré pour comparer la tension Vfb au seuil Th5, pour fournir un signal UV, par exemple binaire, indiquant le résultat de cette comparaison. Le circuit de détection de sous-tension comprend en outre un circuit configuré pour recevoir le signal UV et le signal FBDIS, et pour fournir le signal true-UV à partir des signaux UV et FBDIS.

Plus particulièrement, dans l'exemple de la figure 2, le seuil Th5 est considéré égal au seuil Th2. Ainsi, lorsque le circuit C comprend le comparateur COMP2, ce comparateur COMP2 peut être partagé entre le circuit C et le circuit de détection de sous tension, le signal UV étant alors disponible sur la sortie du comparateur COMP2. Le circuit de détection de sous-tension comprend en outre le circuit LOGIC configuré pour recevoir les signaux UV et FBDIS, et pour fournir le signal true-UV. A titre d'exemple, ce signal true-UV peut être fourni sur une borne de sortie (non représentée en figure 2) du convertisseur 3, par exemple de sorte à indiquer à l'environnement du convertisseur 3 que la tension Vout présente une sous-tension.

A titre d'exemple alternatif, lorsque les seuils Th5 et Th2 sont égaux, le signal true-UV peut être déterminé uniquement à partir du signal UV, par exemple par le circuit LOGIC. En effet, dans ce cas :
- si la borne 200 est déconnectée de la tension Vout, la tension Vfb est d'abord inférieure au seuil Th2 égal à Th5 avant d'être régulée à la valeur du seuil Th3, et sera donc supérieure au seuil Th2 à la fin de la période d'antirebond. Ainsi, à la fin de la période d'antirebond, le signal UV n'indiquera plus que la tension Vfb est inférieure au seuil Th2 et le signal true-UV ne sera pas activé ; et
- si la borne 200 est connectée à la tension Vout, la tension Vfb sera toujours inférieure au seuil Th2 à la fin de la période d'antirebond si la tension Vout présente bien une sous-tension. A la fin de la période d'antirebond, le signal UV indiquera donc que la tension Vfb est inférieure au seuil Th2 et le signal true-UV sera activé

De manière optionnelle, le convertisseur 3 comprend en outre un circuit de détection de surtension ("Over-voltage" en anglais) de la tension Vout. Le circuit de détection de surtension est configuré pour détecter lorsque la tension Vfb est supérieure à un seuil Th4 pendant toute une période d'antirebond et, si c'est le cas, pour indiquer avec un signal d'alarme true-OV que la tension Vout présente une surtension. A titre d'exemple, ce signal true-OV peut être fourni sur une borne de sortie (non représentée en figure 2) du convertisseur 3, par exemple de sorte à indiquer à l'environnement du convertisseur 3 que la tension Vout présente une surtension.

A titre d'exemple, le circuit de détection de surtension comprend un comparateur COMP3 configuré pour comparer la tension Vfb au seuil Th4, pour fournir un signal OV, par exemple binaire, indiquant le résultat de cette comparaison. Le circuit de détection de surtension comprend en outre un circuit, par exemple le circuit LOGIC dans l'exemple de la figure 2, configuré pour recevoir le signal OV, et pour fournir le signal true-OV à partir du signal OV. A titre d'exemple, le comparateur COMP3 a une première entrée recevant une tension déterminée par la tension Vfb, une deuxième entrée recevant une tension Vth4 déterminée par le seuil Th4, et une sortie fournissant le signal OV. Dans l'exemple illustré en figure 2, la première entrée du circuit COMP3 reçoit directement la tension Vfb.

A titre d'exemple, le seuil Th4 est supérieur au seuil Th3. Ainsi, lorsque la borne 200 est déconnectée de la tension, même si la tension Vfb passe au-dessus du seuil Th4 lorsque la source de courant CS commute d'un état inactif a un état actif, la tension Vfb redevient inférieure au seuil Th4 avant la fin de la période d'antirebond du fait de la régulation de la tension Vfb à la valeur du seuil Th3 par la boucle A2.

A titre d'exemple alternatif, lorsque le seuil Th4 est inférieur ou égal au seuil Th3, lorsque le signal OV indique pendant toute la période d'antirebond que la tension Vfb est supérieure au seuil Th4, le circuit fournissant le signal true-OV détermine alors ce signal à partir du signal OV et du signal FBDIS. En effet, à la fin de cette période d'antirebond, le signal true-OV n'indiquera une sous-tension que si le signal FBDIS n'indique pas de déconnexion de la borne 200 à la tension Vout.

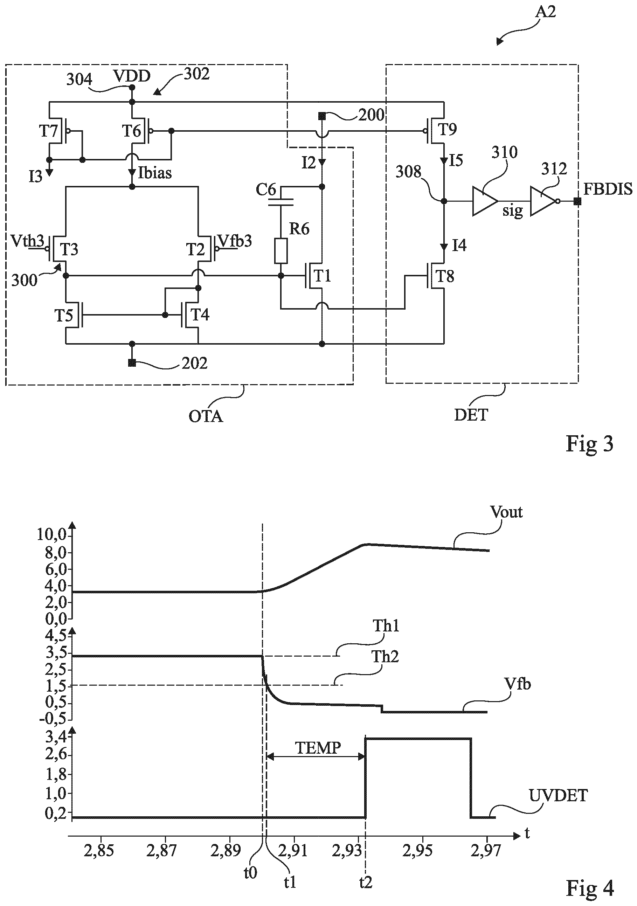

La figure 3 représente un exemple de mise en œuvre du circuit A2 du convertisseur de la figure 2 selon un mode de réalisation.

Dans la mise en œuvre de la figure 3, le circuit A2 comprend l'amplificateur OTA.

L'amplificateur OTA comprend une paire différentielle 300 recevant les entrées respectives de l'amplificateur OTA, à savoir les tensions Vfb3 et Vth3 dans cet exemple. L'amplificateur OTA comprend en outre un transistor T1 couplant la sortie de l'amplificateur OTA à la borne 202, la sortie de l'amplificateur OTA étant connectée à la borne 200 et une grille du transistor T1 étant commandée par la paire différentielle. Plus particulièrement, le transistor est commandé par la paire différentielle 300 de sorte que le transistor T1 soit bloqué si la tension Vfb3 est inférieure à la tension Vth3 (tension Vfb inférieure au seuil Th3) et soit passant si la tension la tension Vfb3 est supérieure à la tension Vth3 (tension Vfb supérieure au seuil Th3) . Lorsque le transistor T1 est passant, le courant I2 est tiré sur la borne 200 par la sortie de l'amplificateur OTA. De préférence, la valeur du courant I2 tiré sur la borne 200, c'est à dire la résistance à l'état passant du transistor T1, lorsque la tension Vfb3 est supérieure à la tension Vth3 dépend de l'écart entre ses deux tensions.

A titre d'exemple, le transistor T1 est un transistor NMOS et a sa source couplée, de préférence connectée, à la borne 202, et son drain couplé, de préférence connecté, à la borne 200.

A titre d'exemple, la paire différentielle 300 comprend deux transistors T2 et T3, par exemple deux transistors PMOS. Le transistor T2 reçoit la tension Vfb3 sur sa grille et le transistor T3 reçoit la tension Vth3 sur sa grille. La grille du transistor T1 est alors connectée à la première borne de conduction du transistor T3.

Les transistors T2 et T3 ont leurs premières bornes de conduction, par exemple leurs drains, couplées à la borne 202. Par exemple, le transistor T2, respectivement T3, a sa première borne de conduction couplée à la borne 202 par un transistor T4, respectivement T5. Les transistors T4 et T5 sont, par exemple, des transistors NMOS. Les transistors T4 et T5 sont montés en miroir l'un de l'autre. Par exemple, le transistor T4, respectivement T5, a sa source connectée à la borne 202 et son drain connecté à la première borne de conduction du transistor T2, respectivement T3. Les transistors T4 et T5 ont leurs grilles connectées entre elles et au drain du transistor T4. Les transistors T4 et T5 forment, par exemple, une charge active de la paire différentielle 300.

La paire différentielle 300 est polarisée par une source de courant 302. La source de courant 302 est connectée entre les deuxièmes bornes de conduction, par exemple les sources, des transistors T2 et T3 et un noeud 304 mis à un potentiel d'alimentation VDD de l'amplificateur OTA. De préférence, le potentiel VDD est inférieur au potentiel Vin (figure 2).

A titre d'exemple, la source de courant 302 comprend un transistor T6, par exemple PMOS, connecté entre le noeud 304 et les deuxièmes bornes de conduction des transistors T2 et T3, et un transistor T7, par exemple PMOS. Le transistor T7 est configuré pour qu'un courant I3 y circule, et les transistor T6 et T7 sont montés en miroir l'un de l'autre, de sorte qu'un courant Ibias déterminé par le courant I7 circule dans le transistor T6 et polarise la paire différentielle 300. Par exemple, la source de chacun des transistors T6 et T7 est couplée, de préférence connectée, au noeud 304, les grilles des transistors T6 et T7 sont connectées entre elles et au drain du transistor T7, et la source du transistor T6 est couplée, de préférence connectée, aux deuxièmes bornes de conduction des transistors T3 et T2.

De préférence, la grille du transistor T1 est couplée à la borne 200 par une association en série d'une résistance R6 et d'une capacité C6.

Dans l'exemple de la figure 2, la boucle de régulation comprend le circuit DET optionnel.

Le circuit DET comprend, dans cet exemple où le circuit OTA comprend la paire différentielle 300 et le transistor T1, un transistor T8 connecté entre un noeud 308 et la borne 202, la grille du transistor T8 étant connectée à la grille du transistor T1. Ainsi, le courant I4 circulant dans le transistor T8 est déterminé par le courant I2 dans le transistor T1, par exemple est égal au courant I2. Par exemple, le transistor T8 est un transistor NMOS ayant sa source connectée à la borne 202 et son drain connecté au noeud 308.

Le circuit DET comprend en outre un transistor T9, par exemple PMOS, configuré pour fournir un courant I5 au noeud 308. Le signal FBDIS est déterminé à partir du potentiel sur le noeud 308. Par exemple, le courant I5 est déterminé de sorte que le potentiel du noeud 308 soit en-dessous d'un seuil Th6 lorsque le courant I4 déterminé par le courant I2, par exemple égal au courant I2, est supérieur au courant I5, et au-dessus de ce seuil Th6 lorsque le courant I4 est nul ou inférieur au courant I5. Dit autrement, dans un exemple où le courant I4 est égal au courant I2, le circuit DET indique que le courant I2 est non nul lorsque le courant I2 à une valeur supérieure à la valeur du courant I5.

A titre d'exemple, le transistor T9 est monté en miroir des transistors T6 et T7 de la source de courant 302. Par exemple, le transistor T9 a sa source connectée au noeud 302, son drain connecté au noeud 308 et sa grille connectée aux grilles des transistors T6 et T7.

A titre d'exemple, pour déterminer le signal FBDIS à partir du potentiel du noeud 308, le circuit DET comprend un circuit de mise en forme. Par exemple, ce circuit de mise en forme comprend un comparateur 310 configuré pour comparer le potentiel du noeud 308 au seuil Th6, et pour fournir un signal binaire sig résultant de cette comparaison. Le comparateur 310 est, par exemple, une bascule de Schmitt ("Schmitt trigger" en anglais). Le signal FBDIS est déterminé à partir du signal sig. Par exemple, le signal sig est fourni en entrée d'un inverseur 312 dont la sortie fournit le signal FBDIS. A titre d'exemple alternatif, le signal FBDIS est le signal sig.

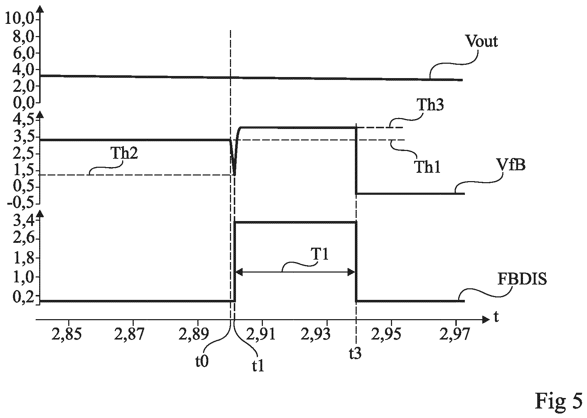

Les figures 4 et 5 illustrent la différence de fonctionnement du convertisseur 3 par rapport à un convertisseur 2 dans lequel un circuit un signal UVDET de détection d'une sous-tension de la tension Vout serait utilisé pour indiquer une déconnexion entre la borne 200 et la tension Vout.

La figure 4 illustre par des chronogrammes le fonctionnement d'un convertisseur 2 comprenant un circuit de détection de sous-tension de la tension Vout, ce circuit étant configuré pour fournir un signal UVDET à l'état haut à la fin d'une période d'antirebond TEMP pendant laquelle la tension Vfb est restée inférieure à un seuil Th2. La figure 4 représente l'évolution, en volts, de la tension Vout, de la tension Vfb et du signal UVDET en fonction du temps t en millisecondes.

Avant un instant t0, la borne 200 est connectée à la tension Vout, et la tension Vout est régulée à sa valeur de consigne. Dans cet exemple, la valeur de consigne de la tension Vout est égale à 3,3 V. La tension Vfb est alors, dans cette exemple, égal au seuil Th1.

A un instant t0, la connexion entre la borne 200 et la tension Vout est interrompue, et la borne 200 ne reçoit plus la tension Vout.

A partir de l'instant t0, la tension Vfb diminue. En particulier, à un instant t1, la tension Vfb devient inférieur au seuil Th2. Dans cet exemple, le seuil Th2 est égal à 1,2 V. Il en résulte qu'une période d'antirebond TEMP débute à l'instant t1. Dans cet exemple, la durée de la période TEMP est égale à environ 25 µs.

A un instant t2 égal à t1 + TEMP, comme la tension Vfb est restée inférieure au seuil Th2 pendant toute la durée TEMP, le signal UVDET est commuté à l'état haut.

Toutefois, utiliser cette commutation du signal UVDET pour désactiver la boucle de régulation principale 208 ne suffit pas. En effet, pendant la durée TEMP, du fait que la tension Vfb est inférieure au seuil Th1, la boucle 208 a commandé les interrupteurs HS et LS de sorte à augmenter la tension Vout. Il en résulte que la tension Vout augmente à partir de l'instant t0, et atteint rapidement, pendant la durée TEMP, des valeurs susceptibles d'endommager une charge alimentée par la tension Vout. Dans l'exemple de la figure 4, la tension Vout augmente jusqu'à atteindre 9 V à la fin de la période TEMP.

La figure 5 illustre par des chronogrammes le fonctionnement du convertisseur 3. La figure 5 représente l'évolution, en volts, de la tension Vout, de la tension Vfb et du signal FBDIS en fonction du temps t en millisecondes.

Avant l'instant t0, la situation est la même qu'en figure 4.

A un instant t0, la connexion entre la borne 200 et la tension Vout est interrompue, et la borne 200 ne reçoit plus la tension Vout.

A partir de l'instant t0, la tension Vfb diminue. En particulier, à l'instant t1, la tension Vfb devient inférieur au seuil Th2. Dans cet exemple, comme en figure 4, le seuil Th2 est égal à 1,2 V. Il en résulte que le circuit C active la source CS pour au moins la durée T1, et que la tension Vfb remonte à une valeur supérieure au seuil Th1 et au seuil Th3.

Du fait que la tension Vfb est supérieure au seuil Th3, la boucle de régulation A2 se met à tirer un courant I2 non nul sur la borne 200 et régule la tension Vfb à la valeur du seuil Th3, tant que la source CS est active. Dans cet exemple, le seuil Th3 est égal à 4 V. Le circuit DET détecte que le courant I2 est non nul, et commute le signal FBDIS à un état, ici l'état haut, indiquant qu'une déconnexion de borne 200 à la tension Vout a été détectée.

En outre, à partir de l'instant t1, du fait que la tension Vfb est supérieure au seuil Th1, la boucle 208 ne commande pas les interrupteurs HS et LS de sorte à faire augmenter la tension Vout. Au contraire, à partir de l'instant t1, la tension Vout décroît avec une pente déterminée par la consommation de la charge alimentée par la tension Vout et par la valeur de capacité de l'élément capacitif C.

Dans cet exemple, le signal FBDIS est utilisé pour désactiver le convertisseur 3 lorsqu'une déconnexion entre la borne 200 et la tension Vout est détectée. Ainsi, à un instant t3 postérieur à l'instant t1, par exemple égal ici à t1+T1 le convertisseur 3 est désactivé, d'où il résulte que la tension Vfb devient nulle et le signal FBDIS commute à son état bas.

Comme cela se voit sur la figure 5, la surtension sur la tension Vout résultant d'une déconnexion entre la borne 200 et la tension Vout est de moins de 200 mV dans cet exemple, ce qui permet de ne pas endommager la charge alimentée par la tension Vout.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. Par exemple, la mise en œuvre des circuits A2 et C ne se limite pas aux exemples de modes de réalisation décrits ci-dessus.

En particulier, bien que l'on ait décrit ci-dessus un convertisseur 3 comprenant un interrupteur HS et un interrupteur LS et une boucle de régulation 208 commandant ces deux interrupteurs, dans d'autres exemples non illustrés, l'interrupteur LS est remplacé par une diode ayant son anode connectée à la borne 202, la boucle 208 étant alors configurée pour ne commander que l'interrupteur HS.

En outre, bien que l'on ait décrits des exemples dans lesquels les tensions Vth1 et Vth3 sont égales et où les tensions respectives Vfb1 et Vfb3 sont différentes, la personne du métier sera en mesure d'adapter ces exemples aux cas où ces deux tensions Vth1 et Vth3 sont différentes et les tensions correspondantes Vth1 et Vth3 sont différentes.

Enfin, la mise en oeuvre pratique des modes de réalisation et variantes décrits est à la portée de la personne du métier à partir des indications fonctionnelles données ci-dessus. En particulier, la personne du métier sera en mesure de déterminer la valeur de l'élément résistif R, la valeur du courant I1, la durée T1, etc... pour obtenir le fonctionnement décrit ci-dessus.

## Revendications

1. Convertisseur abaisseur à découpage (3) comprenant :
- une première borne (200) configurée pour recevoir une tension (Vout) régulée par le convertisseur ;
- un élément résistif (R) couplant la première borne (200) et une deuxième borne (202) configurée pour recevoir un potentiel de référence (GND) ;
- une boucle de régulation principale (208) configurée pour :
* comparer une première tension (Vfb) sur la première borne avec un premier seuil (Th1), et
* réguler, sur la base de cette comparaison, la tension régulée (Vout) à une valeur de consigne déterminée par le premier seuil en commandant un interrupteur de côté haut (HS) du convertisseur ou l'interrupteur de côté haut (HS) et un interrupteur de côté bas (LS) du convertisseur,
- une source de courant (CS) sélectivement activable configurée à l'état actif pour fournir un premier courant (I1) à la première borne (200) ;
- un circuit d'activation (C) configuré pour activer la source de courant (CS) pendant au moins une première durée (T1) lorsque la première tension (Vfb) devient inférieure à un deuxième seuil (Th2) inférieur au premier seuil ; et
- une boucle de régulation en courant (A2) configurée pour :
* comparer la première tension (Vfb) à un troisième seuil (Th3) supérieur au premier seuil,
* réguler la première tension (Vfb) à la valeur du troisième seuil en tirant un deuxième courant (I2) sur la première borne (200) si la première tension est supérieure au troisième seuil, et
* ne rien faire si la première tension (Vfb) est inférieure au troisième seuil (Th3).

2. Convertisseur selon la revendication 1, dans lequel un produit d'une valeur de l'élément résistif (R) par une valeur du premier courant (I1) est supérieur au troisième seuil (Th3).

3. Convertisseur selon la revendication 1 ou 2, dans lequel la boucle de régulation principale (208) est configurée pour augmenter la tension régulée (Vout) lorsque la première tension (Vfb) est inférieure au premier seuil (Th1).

4. Convertisseur selon l'une quelconque des revendications 1 à 3, dans lequel la source de courant (CS) est connectée entre la première borne (200) et une borne (204) du convertisseur configuré pour recevoir un potentiel d'alimentation (Vin).

5. Convertisseur selon l'une quelconque des revendications 1 à 4, dans lequel la boucle de régulation en courant (A2) est configurée pour que, lorsque la première tension (Vfb) est supérieure au troisième seuil (Th3), le deuxième courant (I2) tiré sur la première borne (200) ait une valeur déterminée par la différence entre la première tension (Vfb) et le troisième seuil (Th3).

6. Convertisseur selon l'une quelconque des revendications 1 à 5, dans lequel la boucle de régulation en courant (A2) comprend un amplificateur transimpédance (OTA) ayant une première entrée configurée pour recevoir une tension (Vfb3) déterminée par la première tension (Vfb), une deuxième entrée configurée pour recevoir une tension (Vth3) déterminée par le troisième seuil (Th3), et une sortie couplée, de préférence connectée, à la première borne (200) et configurée pour tirer le deuxième courant (I2) sur la première borne lorsque la première tension (Vfb) est supérieure au troisième seuil (Th3).

7. Convertisseur selon la revendication 6, dans lequel l'amplificateur transimpédance (OTA) comprend :
- une paire différentielle (300 ; T2, T3) recevant les entrées respectives de l'amplificateur transimpédance ; et
- un transistor (T1) couplant la sortie (200) de l'amplificateur transimpédance à la deuxième borne (202), une grille du transistor étant commandée par la paire différentielle.

8. Convertisseur selon la revendication 7, dans lequel la boucle de régulation en courant (A2) comprend un circuit de détection (DET) configuré pour détecter que le deuxième courant (I2) est non nul, et pour fournir un signal (FBDIS) indiquant lorsque le deuxième courant est non nul, le circuit de détection comprenant :
- un transistor (T8) connecté entre un noeud (308) et la deuxième borne (202) et ayant une grille connectée à la grille du transistor (T1) de l'amplificateur transimpédance (OTA), et
- un autre transistor (T9) configuré pour fournir un courant (I5) audit noeud, le signal indiquant lorsque le deuxième courant est non nul (FBDIS) étant déterminé à partir d'un potentiel dudit noeud (308).

9. Convertisseur selon l'une quelconque des revendications 1 à 7, dans lequel la boucle de régulation en courant (A2) comprend un circuit de détection (DET) configuré pour détecter que le deuxième courant (I2) est non nul, et pour fournir un signal (FBDIS) indiquant lorsque le deuxième courant est non nul.

10. Convertisseur selon l'une quelconque des revendications 1 à 9, dans lequel le circuit d'activation (C) comprend :
- un comparateur (COMP2) configuré pour comparer la première tension (Vfb) au deuxième seuil (Th2) et pour fournir un signal binaire (UV) indiquant le résultat de ladite comparaison ; et
- un circuit (PG) recevant ledit signal binaire (UV) et étant configuré pour activer la source de courant (CS) pendant au moins la première durée (T1) lorsque le signal binaire commute à un état indiquant que la première tension (Vfb) est inférieure au deuxième seuil (Th2).

11. Convertisseur selon l'une quelconque des revendications 1 à 10, dans lequel une valeur du premier courant (I1) est configurée pour que, lorsque la première borne (200) reçoit la tension régulée (Vout), une variation de la tension régulée (Vout) pendant la première durée (T1) où la première borne (200) reçoit le premier courant (I1) soit négligeable, par exemple pour qu'une augmentation de la tension régulée provoquée par le premier courant ait une pente inférieure à 10 µV par microseconde.

12. Convertisseur selon l'une quelconque des revendications 1 à 11, dans lequel la première durée (T1) est supérieure au temps de réaction de la boucle de régulation en courant (A2).

13. Convertisseur selon l'une quelconque des revendications 1 à 12, dans lequel :
- le convertisseur (3) comprend une troisième borne (206) ;
- l'interrupteur de côté haut (HS) est connecté entre une borne (204) configurée pour recevoir un potentiel d'alimentation (Vin) et la troisième borne (206) ; et
- le convertisseur est configuré pour que ses première et troisième bornes (200, 206) soient couplées entre elles, de préférence par une inductance (L), et pour qu'un élément capacitif (C) soit connecté entre ses deuxième et première bornes (202, 200).

14. Convertisseur selon la revendication 13, dans lequel la boucle de régulation principale (208) est configurée pour commander des commutations de l'interrupteur de côté haut (HS) ou des interrupteurs de côté haut (HS) et de côté bas (LS) de sorte à augmenter la tension régulée (Vout) lorsque la première tension (Vfb) est inférieure au premier seuil (Th1).

15. Dispositif (1) comprenant un convertisseur (3) selon la revendication 13 ou 14, une inductance (L) connectée entre les première et troisième bornes (200, 206) du convertisseur et un élément capacitif (C) connecté entre les première et deuxième bornes (200, 202) du convertisseur.
